Europäisches Patentamt

European Patent Office

Office européen des brevets

(19)

(11) Veröffentlichungsnummer: **0 478 952 A1**

# EUROPÄISCHE PATENTANMELDUNG

(12)

(21) Anmeldenummer: **91114418.6**

(51) Int. Cl.5: **B60T 8/00**, B60T 13/66

(22) Anmeldetag: **28.08.91**

(30) Priorität: **01.10.90 DE 4030981**

(43) Veröffentlichungstag der Anmeldung:
**08.04.92 Patentblatt 92/15**

(84) Benannte Vertragsstaaten:
**DE FR IT SE**

(71) Anmelder: **ROBERT BOSCH GMBH**
**Postfach 30 02 20**
**W-7000 Stuttgart 30(DE)**

(72) Erfinder: **Stumpe, Werner, Dipl.-Ing.**
**Ferdinand-Hanauer-Strasse 62**
**W-7000 Stuttgart 50(DE)**

(54) **Elektro-pneumatische Anhänger-Bremsanlage.**

(57) Es wird eine elektro-pneumatische Anhänger-Bremsanlage vorgeschlagen, bei welcher der Anhänger normalerweise mittels elektrischer Bremssignale pneumatisch gebremst wird. Ohne elektrische Bremssignale vom Zugwagen wird der Anhänger über ein Rückhalteventil (30, 31, 32, 33) unter Umgehung der elektrischen Steuerung konventionell gebremst. Wenn dann der tatsächliche elektrische Sollwert vom Zugfahrzeug her nicht zur Verfügung steht, liefert bei ABS-Aktivierung im Anhänger ein Drucksensor (8) am Anhänger-Bremsventil (1) ersatzweise einen entsprechenden elektrischen Sollwert.

Auf diese Weise ist selbst bei einem Fehler in der Elektrik noch ein sicheres Bremsen des Anhängers, auch mit ABS-Funktion, möglich. Die Anhänger-Bremsanlage ist für Wagenzüge des Straßenverkehrs bestimmt.

EP 0 478 952 A1

## Stand der Technik

Die Erfindung bezieht sich auf eine elektropnematische Anhänger-Bremsanlage nach der Gattung des Hauptanspruchs. Eine derartige Bremsanlage ist bekannt (DE-OS 32 07 793). Diese bekannte Bremsanlage hat den Nachteil, daß sie bei alleiniger Wirkung des pneumatischen Rückhaltkreises keine sinnvolle ABS-Funktion ermöglicht, obwohl alle elektrischen/elektronischen Komponenten funktionstüchtig sind.

Aus der EP-A2 03 45 203 ist eine Bremsanlage für ein Zugfahrzeug bekannt, bei der ein Wechsel-Ventil zwischen dem elektrisch arbeitenden Drucksteuerventil und dem Bremszylinder angeordnet ist. Mit der elektro-pneumatischen Ventilkombination nach dieser EP-A2 ist aber eine ABS-Funktion für den pneumatischen Rückhaltkreis nur unter bestimmten Voraussetzungen möglich.

Wird eine solche Ventilkombination nämlich in einer Anhänger-Bremsanlage installiert, dann kann der Anhänger kein ABS ausführen, wenn dieser Anhänger mit einem Zugfahrzeug ohne eine ELB (aber mit ABS, d.h. das Anhänger-Steuergerät ist stromversorgt) betrieben wird. Der über das Anhängerbremsventil zu den Bremszylindern über das Wechselventil eingesteuerte Bremsdruck wird an den elektrischen Drucksteuerventilen vorbeigeleitet.

Zwar wäre es noch denkbar, daß bei ABS-Aktivierung die elektrischen Schaltventile in Funktion genommen werden. Dies würde aber einmal dem geplanten Sicherheitsgedanken der EP-A2 03 45 201 entgegenwirken (Fehlinformation löst Bremsung aus) zum anderen ist ohne elektrisches Sollsignal kein Vergleich mit dem vorgegebenen Betriebsbremswert (pneumatischer Bremsdruck) möglich. Bei begonnener ABS-Regelung ist ohne elektrischen Sollwert der Steuer-Elektronik nicht bekannt, zu welchem Zeitpunkt die Bremse so weit gelöst wurde, daß eine ABS-Regelung nicht mehr erforderlich ist.

Abhilfen für dieses Problem sind in der eingangs genannten DE-OS 32 07 793 sowie in der DE-OS 33 44 301 und 33 46 919 durch Sensierung des pneumatischen Druckes angedeutet. Mit der DE-OS 33 44 301 wird vorgeschlagen, aus dem pneumatischen Bremsdruck ein entsprechendes elektrisches Signal zu bilden. Der pneumatische Bremsdruck gelangt hier aber nicht zum Wechselventil. Zum Wechselventil gelangt nur der Notbremsdruck beim Abreißen der Vorratsleitung. Für diesen Fall kann aber auf ABS verzichtet werden.

Bei der Bauart nach der DE-OS 33 46 919 ist ebenfalls eine Sensierung des vom Zugfahrzeug kommenden pneumatischen Bremsdruckes vorgesehen. In diesem Fall sind aber die Drucksteuerventile so angeordnet, daß bei Bremsung über den pneumatischen Rückhaltkreis an den Drucksteuerventilen der pneumatische Bremsdruck ansteht. Bei einer ABS-Regelung kann der Druckanstieg in den Bremszylindern jeweils nur bis zu diesem Druck erfolgen.

Schließlich wird bei der eingangs genannten DE-OS 32 07 793 zwar bei nicht vorhandenem elektrischen Bremssignal vom Zugfahrzeug mit dem Drucksensorsignal aus der Anhängerbremsleitung eine elektrische Bremsdruckregelung dargestellt. Um diese Funktion aber abgesichert und nicht ungewollt auszuführen, muß die Druckwerterfassung entsprechend sicher sein. Und dies ist nicht für jeden Fall gegeben.

## Vorteile der Erfindung

Die eingangs genannte elektro-pneumatische Anhänger-Bremsanlage mit den kennzeichnenden Merkmalen des Hauptanspruchs hat demgegenüber den Vorteil, daß der Anhänger ohne elektrisches Bremssignal vom Zugfahrzeug über den pneumatischen Rückhaltkreis unter weitgehender Umgehung des elektrischen Drucksteuerventils gebremst werden kann.

Bei Durchschaltung des pneumatischen Bremsdruckes an dem Drucksteuerventil zu dem Bremszylinder (Bremsung mit Rückhaltkreis) wird die Funktion der Drucksensoren, insbesondere der für den pneumatischen Bremsdruck maßgebenden (pneumatische Bremsleitung), kontrolliert. Vorausgesetzt, daß wenigstens die ABS-Steckverbindung zwischen Zugfahrzeug und Anhänger existiert.

Bei ABS-Aktivierung im Anhänger liefert der Drucksensor in der pneumatischen Bremsleitung ersatzweise den elektrischen Sollwert, wenn der tatsächliche elektrische Sollwert vom Zugfahrzeug nicht verfügbar ist.

Da der Drucksensor in der pneumatischen Bremsleitung weitgehend überwacht und mit anderen verglichen wird, ist eine Redundanz dieses Signalwertes nicht erforderlich. Fehlerhafte Meßwerte dieses Sensors während ABS ergeben keine kritischen Zustände.

## Zeichnung

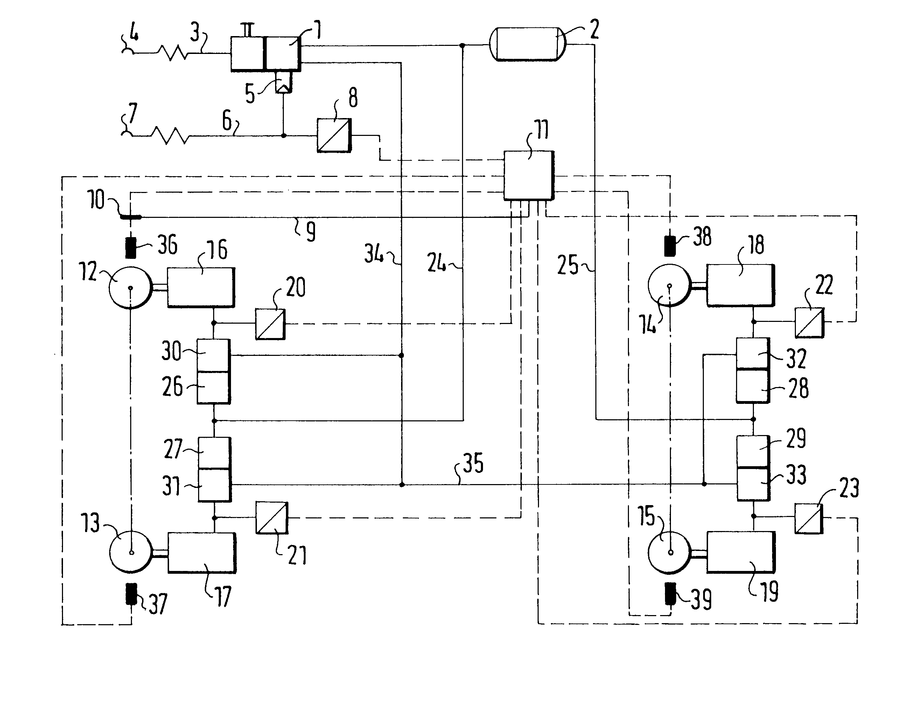

Ein Ausführungsbeispiel der Erfindung ist in der Zeichnung dargestellt und in der nachfolgenden Beschreibung näher erläutert.

## Beschreibung des Ausführungsbeispiels

Eine elektro-pneumatische Anhänger-Bremsanlage hat ein Anhänger-Bremsventil 1, dem ein Anhänger-Vorratsbehälter 2 nachgeordnet ist.

Zum Anhänger-Bremsventil 1 führt eine Vorratsleitung 3, die an einem Vorratsleitungs-Kupplungskopf 4 ihren Ausgang nimmt. Das Anhänger-Bremsventil 1 hat einen Anschluß 5 für eine Bremsleitung 6, die von einem Bremsleitungs-Kupplungskopf 7 herangeführt ist. Den jeweiligen Druck am Anhänger-Bremsventil 1 mißt ein Drucksensor 8. Neben den beiden Druckmittelleitungen, der Vorratsleitung 3 und der Bremsleitung 6 gibt es auf dem Anhänger noch eine dritte Leitung, eine elektrische Leitung 9, die von einem Stecker 10 zur Verbindung mit einem Zugwagensystem zu einem elektronischen Steuergerät 11 auf dem Anhänger führt.

Der Anhänger hat vier Räder 12, 13, 14, 15 mit vier Bremszylindern 16 und 17 bzw. 18 und 19. An jedem Bremszylinder 16 bis 19 sitzen Drucksensoren 20, 21, 22, 23 und in je einer vom Vorratsbehälter 2 zu jedem Radpaar 12/13 bzw. 14/15 führenden Vorratsdruck-Leitung 24 bzw. 25 sind hintereinander je ein Steuerventil 26, 27, 28, 29 und ein Rückhalteventil 30, 31, 32, 33 angeordnet, die jeweils als Kombinationspaar ein Drucksteuerventil 26/30, 27/31, 28/32 und 29/33 bilden, das über nicht dargestellte Leitungen an das Steuergerät 11 angeschlossen ist. Zu jedem Rückhalteventil 30, 31, 32, 33 führt eine pneumatische Bremsdruckleitung 34 bzw. 35, die an das Anhänger-Bremsventil 1 angeschlossen ist. Schließlich ist noch zu bemerken, daß jedes Fahrzeugrad 12, 13, 14, 15 mit einem Drehzahl-Sensor 36, 37, 38, 39 bestück ist, die ihre Signale zwecks Blockierschutzüberwachung ebenfalls an das elektronische Steuergerät 11 abgeben.

Wirkungsweise

Über den Vorratsleitungs-Kupplungskopf 4 und das Anhänger-Bremsventil 1 wird der Anhänger-Vorratsbehälter 2 mit Druckluft vom Zugwagen aufgefüllt. Beim Bremsen des Wagenzuges wird ein pneumatischer Bremsdruck über den Bremsleitungs-Kupplungskopf 7 zum Anhänger-Bremsventil 1 geleitet. Der vom Anhänger-Bremsventil 1 ausgesteuerte Druck gelangt über die Bremsdruck-Leitungen 34 und 35 zu den Rückhalteventilen 30, 31, 32, 33 und bleibt dort in Bereitschaft. Dabei wird der Eingangs- oder der Ausgangsdruck, beim Ausführungsbeispiel der Eingangsdruck am Anhänger-Bremsventil 1 durch den Drucksensor 8 sensiert und dem elektronischen Steuergerät 11 gemeldet. Auf der elektrischen Seite des Bremssystems steht über die Vorratsdruck-Leitungen 24 und 25 ständig Vorratsdruck an den Steuerventilen 26, 27, 28 und 29 an. Bei normalerweise erfolgender elektrischer Ansteuerung über die Leitung 9 oder bei der durch die Drehzahl-Sensoren 36, 37, 38, 39 eingeleiteten Arbeit des Blockierschutzes werden die Drucksteuerventile 26/30, 27/31, 28/32 und 29/33 so geschaltet, daß der Bremsdruck erhöht, gehalten oder abgesenkt wird. Den in die Bremszylinder 16, 17, 18, 19 jeweils eingesteuerten Druck sensieren die Drucksensoren 20, 21, 22, 23 unmittelbar an den Bremszylindern 16, 17, 18, 19. Auf diese Weise erfolgt die Auswahl von pneumatischem oder elektrisch eingeregeltem Druck erst zwischen dem Drucksteuerventil und dem Bremszylinder.

Fehlt jedoch das elektrische Bremssignal vom Zugfahrzeug, weil das den Wagenzug ziehende Zugfahrzeug eventuell nur eine konventionelle ABS-Steckerverbindung besitzt oder weil ein elektrisches Bremssignal ausgefallen ist, dann wird über die Rückhalteventile 30, 31, 32 und 33 auf konventionelle Art gebremst. Über die elektrische Leitung 9 wird weiterhin das elektronische Steuergerät 11 mit Strom aus dem Zugwagen versorgt, so daß es arbeitsfähig ist. Dadurch können über die Drucksensoren 8 und 21 bis 23 die pneumatischen Drücke einerseits am Anhänger-Bremsventil 1 und andererseits an den Bremszylindern 16 bis 19 miteinander verglichen werden. Wenn dabei Abweichungen auftreten und diese Abweichungen einen vorgegebenen Grenzwert überschreiten, erfolgt eine Meldung an den Fahrer.

Sensieren die Drehzahlfühler 36 bis 39 eine Blockiergefahr, dann wird die Blockierschutzeinrichtung aktiviert. Dabei schalten die Drucksteuerventile 26/30, 27/31, 28/32 und 29/33 trotz Defekt der Elektrik auf elektrische Bremsdruckregelung auf dem Anhänger um. Die Drucksteuerventile können dann jeden erforderlichen Druckwert nach ABS-Kriterien einregeln. Dabei überwachen die Drucksensoren 20 bis 23 an den Bremszylindern 16 bis 19, daß der maximal vorgegebenen pneumatische Bremswert nicht überschritten wird. Die Druckerhöhung bei der Arbeit der Blockierschutzeinrichtung kann deshalb ohne Gefahr aus dem Anhänger-Vorratsbehälter 2 durchgeführt werden.

Es ist also festzuhalten, daß bei der Arbeit des Blockierschutzes auch bei einem Fehler in der Elektrik des Zugfahrzeuges der Drucksensor 8 im Vergleich mit den Drucksensoren 20 bis 23 ersatzweise einen elektrischen Wert, einen Sollwert liefert, wenn der tatsächliche elektrische Sollwert vom Zugwagen wegen des genannten Defekts nicht zur Verfügung steht. Da der Drucksensor 8 am Anhänger-Bremsventil 1 vom elektronischen Steuergerät 11 überwacht und der ermittelte Wert von diesem Steuergerät 11 mit anderen gespeicherten oder aktuellen Druckwerten verglichen wird, ist eine Redundanz des Sensorsignals vom Drucksensor 8 nicht erforderlich. Wenn während der Arbeit des Blockierschutzes nicht plausible Meßwerte dieses Drucksensors 8 auftreten, dann entsteht dadurch keine kritische Situation am Wagenzug.

**Patentansprüche**

1. Elektro-pneumatische Anhänger-Bremsanlage mit einer elektronischen Bremsdrucksteuerung und mit einem pneumatischen Rückhaltekreis sowie mit einem dem bzw. den Bremszylindern beigeordneten Drucksteuerventil und mit Drucksensoren und einem elektronischen Steuergerät und mit einer Blockierschutzeinrichtung, wobei mit dem bzw. den Drucksteuerventil(en) der jeweils von der elektronischen Bremsdrucksteuerung oder von pneumatischen Rückhaltekreis stammende Druck auswählbar ist und jedes Drucksteuerventil bei Ausfall des elektrischen Bremssignals vom Zugwagen über den pneumatischen Rückhaltekreis im Bremssinn umstellbar ist, dadurch gekennzeichnet, daß am Anhänger-Bremsventil (1) ein Drucksensor (8) angeordnet ist, der bei der Arbeit der Blockierschutzeinrichtung einen Ersatz-Sollwert für das elektronische Steuergerät (11) liefert, wenn der tatsächliche elektrische Sollwert vom Zugfahrzeug her nicht zur Verfügung steht.

2. Anhänger-Bremsanlage nach Anspruch 1, dadurch gekennzeichnet, daß die Blockierschutzeinrichtung als Einkanal-Steuereinrichtung ausgebildet ist und daß beim Durchschalten des pneumatischen Rückhaltedruckes von jedem Drucksteuerventil (26/30; 27/31; 28/32; 29/33) zu dem Bremszylinder (16, 17, 18, 19) die richtige Arbeit der Drucksensoren (8; 20, 21, 22, 23) mit Hilfe des elektronischen Steuergerätes (11) kontrollierbar ist.

3. Anhänger-Bremsanlage nach Anspruch 1 oder 2, dadurch gekennzeichnet, daß jeder Bremszylinder-Drucksteuerventil-Kombination (16/26/30; 17/27/31, 18/28/32; 19/29/33)ein eigener Drucksensor (20, 21, 22, 23) zugeordnet ist.

4. Anhänger-Bremsanlage nach einem der Ansprüche 1 bis 3, dadurch gekennzeichnet, daß jedes Drucksteuerventil (26/30; 27/31; 28/32; 29/33) mit einem Rückhalteventil (30 31, 32, 33) zusammenarbeitet, das unmittelbar vor dem Bremszylinder (16, 17, 18, 19) angeordnet ist.

# EUROPÄISCHER RECHERCHENBERICHT

Nummer der Anmeldung

## EP 91 11 4418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 522 603 (ROBERT BOSCH) <br> * Seite 3, Zeile 11 - Seite 4, Zeile 11; Abbildung 1 * * | 1 | B 60 T 8/00 <br> B 60 T 13/66 |
| D | (& DE-A-3207793 (ROBERT BOSCH)) <br> – – – | | |
| A | EP-A-0 146 769 (ROBERT BOSCH) <br> * das ganze Dokument * * | 1 | |
| D | (& DE-A-3346919 (ROBERT BOSCH)) <br> – – – | | |
| A | GB-A-2 131 508 (SAAB-SCANIA) <br> * Zusammenfassung; Abbildung 2 * * | 1 | |
| D | (& DE-A-3344301 (SAAB-SCANIA)) <br> – – – | | |
| A,D | EP-A-0 345 203 (DAIMLER-BENZ) <br> * Zusammenfassung; Abbildungen * * <br> – – – – – | 1,3,4 | |

|  |
|---|
| **RECHERCHIERTE SACHGEBIETE (Int. Cl.5)** |
| B 60 T |

Der vorliegende Recherchenbericht wurde für alle Patentansprüche erstellt

| Recherchenort | Abschlußdatum der Recherche | Prüfer |
|---|---|---|
| Den Haag | 08 Januar 92 | MEIJS P.C.J. |